# DEMANDE DE BREVET EUROPEEN

(11) **EP 0 841 243 A1**
(43) Date de publication de la demande: **13.05.1998**
(21) Numéro de dépôt: 97118993.1
(22) Date de dépôt: 31.10.1997
(51) Int. Cl.: B62M 25/08

(54) **Système à émetteur et récepteur, notamment pour la commande électrique du dérailleur d'un cycle**

(30) Priorité: 07.11.1996 FR 9613850
(71) Demandeur: MAVIC S.A., 01990 Saint-Trivier sur Moignans (FR)
(72) Inventeur: Kubacsi, Michel, 01600 Toussieux (FR)
(74) Mandataire: Lejeune, Benoit

(57) **Abrégé**

L'invention concerne un système de commande électrique d'un organe d'une bicyclette.

Ce système comprend un émetteur de signaux de commande. Chaque signal de commande émis comporte un code (45) spécifique au système de façon que les ordres d'actionnement ne soient reconnaissables que par les organes du même système.

Si un code non autorisé est reçu, le fonctionnement de l'organe d'actionnement est soit inhibé, soit perturbé.

L'organe d'actionnement est, par exemple, un dérailleur.

## Description

L'invention est relative à un système à émetteur et récepteur, notamment pour la commande du dérailleur d'un cycle.

En général, l'actionnement des organes principaux d'une bicyclette, tels que les dérailleurs et les freins, est commandé par des organes mécaniques. Le plus souvent, on prévoit des poignées ou leviers sur le guidon ou le cadre qui sont reliés par des câbles aux organes correspondants : frein avant, frein arrière, dérailleur (avant) pour positionner la chaîne sur un plateau et dérailleur (arrière) pour positionner la chaîne sur un pignon solidaire du moyeu de la roue arrière.

Ces actionnements mobilisent l'attention du cycliste et exigent parfois des efforts.

Pour remédier à ces inconvénients, le brevet européen N°558 425 décrit un dérailleur à commande électrique présentant, d'une part, sur le guidon, ou, de façon plus générale, à portée du cycliste, des interrupteurs et, d'autre part, des électroaimants d'actionnement du dérailleur arrière et/ou du dérailleur avant. Le dérailleur décrit dans ce brevet européen comporte une roue dentée, entraînée en rotation par la chaîne, et qui coopère avec un élément allongé. Ce dernier élément, ou bras, coopère de son côté avec deux doigts déplaçables grâce auxdits électroaimants. Chaque doigt reste dans un plan de position fixe par rapport au cadre.

La rotation de la roue dentée du dérailleur provoque un mouvement alternatif du bras et, lorsque le premier doigt bloque ce bras, la roue dentée du dérailleur est déplacée, par réaction, dans une direction déterminée, ce qui provoque un changement de vitesse, par exemple vers les pignons de plus grand diamètre. De même, quand le second doigt bloque le bras, la roue dentée se déplace en sens opposé, c'est-à-dire vers les pignons de plus petit diamètre.

On a également proposé des dérailleurs à moteur électrique.

Il est possible d'actionner électriquement d'autres organes du cycle, par exemple les freins avant et arrière, comme proposé dans le brevet français 2 654 698. Dans ce brevet est décrit aussi un système de télécommande sans fil avec un émetteur installé sur le guidon qui transmet des signaux vers les freins et vers les dérailleurs.

Dans ces divers systèmes, la partie de commande, se trouvant, en général, sur le guidon, ainsi que - dans une certaine mesure - les organes d'actionnement électriques, sont relativement aisés à démonter. Ces divers éléments sont d'une valeur marchande non négligeable. La probabilité de vol est donc importante.

L'invention fournit des moyens pour dissuader ou empêcher le vol.

Elle se rapporte à un système comportant, d'une part, un générateur de signaux de commande, et, d'autre part, un organe d'actionnement d'un élément d'un cycle qui est caractérisé en ce que le générateur de signaux de commande émet des signaux codés spécifiques au système, l'organe d'actionnement étant équipé de moyens de décodage de ces signaux codés.

De cette manière, si l'un des deux éléments du système est dérobé, il sera inutilisable avec l'élément complémentaire d'un autre système car le décodeur ne reconnaîtra pas le code de l'émetteur.

Si l'ordre de commande fourni par l'émetteur n'est pas reconnu par le décodeur de l'organe d'actionnement, aucune action ne sera commandée.

En variante, un code d'émetteur ne correspondant pas au code du décodeur provoque des actionnements indésirés afin de perturber le fonctionnement de l'organe d'actionnement, ces actionnements étant sans rapport avec la commande demandée par le cycliste. A titre d'illustration, dans le cas d'un dérailleur arrière, on peut commander automatiquement un changement de vitesse en permanence, du plus petit vers le plus grand pignon et vice-versa. Quand on fait appel au dérailleur décrit dans le brevet européen 558425, on peut réaliser cette commande de sécurité en alimentant en continu un électroaimant jusqu'à ce que la chaîne soit sur le pignon de plus petit (ou de plus grand) diamètre et, ensuite, le second électroaimant est alimenté jusqu'à ce que la chaîne soit sur le pignon de plus grand (ou plus petit) diamètre, et ainsi de suite.

L'utilisation d'une bicyclette dotée d'un élément non autorisé est donc pratiquement impossible.

Le code est de préférence inscrit une seule fois, lors de la première utilisation du système. La sécurité contre le vol est ainsi assurée pratiquement sans contrainte pour l'usager.

Dans une réalisation, on prévoit une protection supplémentaire grâce à un code d'utilisation qui permet le fonctionnement du système seulement quand un code confidentiel a été introduit au niveau de l'émetteur.

Le code confidentiel est, par exemple, introduit une fois pour toutes lors de l'initialisation du système. Il est également utilisable pour une réinitialisation, c'est-à-dire quand, par exemple, le récepteur a été réparé ou changé.

Le code confidentiel comporte de préférence un nombre limité de chiffres, afin qu'il soit aisément mémorisable par l'utilisateur. Par contre, le code spécifique au système présentera un nombre supérieur de chiffres afin de limiter le risque que deux cycles roulant à proximité présentent le même code de système.

Dans le cas de l'utilisation d'un code confidentiel, on peut également prévoir aussi un moyen d'inhibition, tel qu'un autre code, à la fin de l'utilisation de la bicyclette. L'inhibition peut également être automatique en cas de non utilisation de la bicyclette pendant un temps déterminé, par exemple quelques minutes. Dans ce cas, il faudra introduire de nouveau le code confidentiel au début de chaque utilisation de la bicyclette.

Bien entendu, le code confidentiel d'initialisation et éventuellement le code confidentiel d'inhibition sont distincts des codes du système.

Dans une variante, pour laquelle l'organe d'actionnement est alimenté à partir du guidon, c'est-à-dire quand la transmission entre l'émetteur et le récepteur s'effectue à l'aide de fils, les codes d'inhibition et d'autorisation sont utilisés seuls, sans l'utilisation d'un code système.

De préférence, on utilise une mémoire non volatile de type EEPROM pour mémoriser les codes dans l'émetteur et dans le récepteur de façon que ces codes ne soient pas effacés lors d'un changement de pile(s) d'alimentation électrique de l'émetteur ou du récepteur.

D'autres caractéristiques et avantages de l'invention apparaîtront avec la description de certains de ses modes de réalisation, celle-ci étant effectuée en se référant aux dessins ci-annexés sur lesquels :
la figure 1 montre une bicyclette équipée d'un système selon l'invention,
la figure 2 est un schéma d'un dispositif de commande du dérailleur arrière de la bicyclette représentée sur la figure 1,
la figure 3 est un schéma d'un système conforme à l'invention, et
la figure 4 est un diagramme montrant la structure d'un message émis par le système selon l'invention.

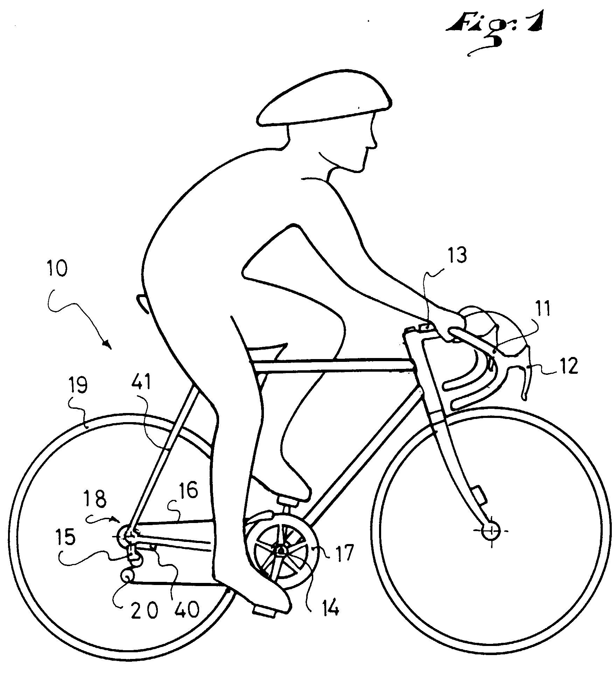

La bicyclette 10, représentée sur la figure 1, comporte, de façon classique, un guidon 11 sur lequel sont disposés tous les organes de commande, à savoir les poignées de frein 12 et la commande 13 des dérailleurs avant 14 et arrière 15.

Le dérailleur avant 14 comprend une fourche de guidage de la chaîne 16. La fourche est déplaçable latéralement, c'est-à-dire dans une direction horizontale sensiblement perpendiculaire à la direction d'avancement du cycle de façon à installer la chaîne sur un plateau denté sélectionné 17. Le cycle comprend, par exemple, trois plateaux de diamètres différents. Le plateau extérieur est seul visible sur le dessin.

Le dérailleur arrière 15 est également un élément de guidage de la chaîne 16 déplaçable latéralement de façon à ce que cette chaîne 16 coopère avec un pignon sélectionné 18, le cycle étant équipé de plusieurs pignons concentriques de diamètres différents qui sont montés sur le moyeu de la roue arrière 19. Les divers pignons ne sont pas représentés en détail sur le dessin. Ce dérailleur 15 comporte aussi des moyens de renvoi 20 à ressort pour garder la chaîne 16 constamment tendue.

Dans l'exemple, le dérailleur arrière 15 est du type de celui décrit dans le brevet européen n°558425 auquel on se rapportera pour plus de précisions.

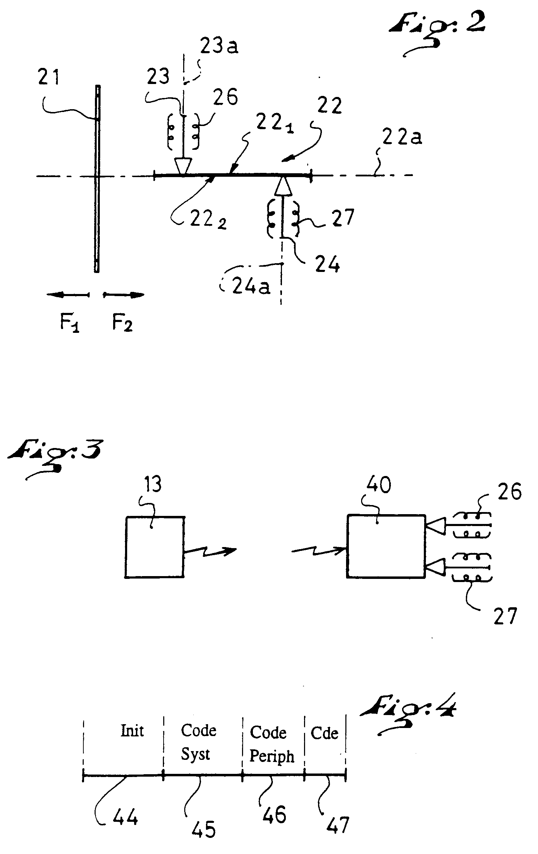

En bref, ce dérailleur arrière 15 comporte (figure 2) une roue dentée 21 entraînée en rotation par la chaîne 16 et qui coopère avec un bras 22 déplaçable selon son axe 22a en un mouvement alternatif. Le mouvement rectiligne alternatif est provoqué par la rotation de la roue dentée 21.

Le bras 22 comporte sur ses grandes faces opposées 22₁ et 22₂ des alvéoles (non montrées) de réception de doigts 23 et 24. Les doigts 23 et 24 sont déplaçables transversalement par rapport à la direction 22a de déplacement de l'élément 22. Le mouvement des doigts 23 et 24 est obtenu par l'alimentation d'électroaimants, respectivement 26 et 27, et grâce à des moyens de rappel à ressort (non montrés). Les axes 23a et 24a des doigts, respectivement 23 et 24, ont une position fixe par rapport au cadre 30 de la bicyclette 10.

La forme des alvéoles coopérant avec le doigt 23 est telle que l'élément 22 est retenu par le doigt 23 quand l'effort exercé par la roue 21 sur l'élément 22 s'exerce dans un sens, cet élément 22 n'étant pas retenu quand l'effort s'exerce dans l'autre sens. Il en résulte que la coopération du doigt 23 avec une alvéole correspondante de l'élément 22 entraîne, par réaction, un déplacement de la roue dentée 21 dans un sens déterminé, par exemple celui de la flèche F₁.

Le doigt 24 coopère avec d'autres alvéoles ayant des formes telles que cette coopération provoque le déplacement de la roue 21 dans le sens contraire, c'est-à-dire celui de la flèche F₂.

L'actionnement du doigt 23 permet ainsi de déplacer la chaîne 16 vers un pignon de plus grand diamètre, et l'actionnement du doigt 24 déplace la chaîne 16 vers un pignon de plus petit diamètre.

L'alimentation électrique des électroaimants 26 et 27 est commandée par des interrupteurs (non montrés) du type à bouton poussoir ou analogue sur le guidon. On peut d'ailleurs prévoir des interrupteurs en parallèle de façon à disposer les commandes de changement de vitesse en plusieurs endroits.

Dans le brevet européen 558 425, la pile électrique pour l'alimentation des électroaimants 26 et 27 est solidaire du guidon, et des fils sont prévus entre la pile et les interrupteurs du guidon et les électroaimants.

Dans le mode de réalisation préféré de la présente invention, on prévoit une liaison sans fil entre un boîtier 13 émetteur d'un signal de commande et un dispositif de réception 40 solidaire de la fourche 41. Le dispositif de réception, ou récepteur, 40 décode les signaux provenant du boîtier 13 et alimente, selon les signaux reçus, les électroaimants 26 et 27 (figure 3).

Les messages transmis par l'émetteur du boîtier 13 sont de type numérique. Ils ont la structure présentée sur la figure 4, c'est-à-dire qu'ils comportent, en tête, un mot 44 d'initialisation, ensuite un mot 45 qui est un code spécifique au système, puis un mot 46 d'adressage de périphérique, c'est-à-dire destiné à indiquer que le message doit être exécuté par les électroaimants 26 ou 27, mais non par d'autres éléments. Enfin, un mot numérique 47 indique le type de la commande, par exemple si c'est l'électroaimant 26 qui doit être alimenté ou si c'est l'électroaimant 27.

Le mot 45 propre au système est un code introduit grâce à des boutons d'un clavier simplifié sur le boîtier 13 qui comporte en outre un dispositif d'affichage par exemple à cristaux liquides (non montré). Ce code est enregistré dans une mémoire non volatile de l'émetteur et transmis vers le boîtier 40 qui l'enregistre, comme pour l'émetteur, dans une mémoire non volatile de type EEPROM.

Lors du fonctionnement usuel, le mot 45 reçu par le récepteur 40 est comparé, dans ce répéteur, au mot enregistré dans sa mémoire non volatile. S'il n'y a pas identité entre ces mots, les électroaimants 26 ou 27 sont commandés de façon continue comme expliqué ci-dessus : l'électroaimant 26 est alimenté de façon permanente pour que la chaîne atteigne rapidement le pignon de plus grand diamètre, et, immédiatement après, l'électroaimant 27 est alimenté pour que la chaîne atteigne le pignon de plus petit diamètre, et ainsi de suite, ce qui constitue un fonctionnement particulièrement dissuasif de l'utilisation du système volé.

Un mot ou code 45 non reconnu par le récepteur 40 peut également actionner une alarme, par exemple sonore. Un mot 45 non reconnu par le récepteur 40 peut également inhiber toute action sur le dérailleur électrique le rendant inopérant.

De préférence, des moyens sont prévus pour modifier le code au niveau de l'émetteur, après introduction du code initialement fourni. Ceci donne une grande flexibilité au système.

Dans un mode de réalisation qui offre une sécurité élevée contre les risques de vol, l'initialisation est effectuée à l'aide d'un code confidentiel, de préférence comportant un nombre limité de chiffres, par exemple 4, pour pouvoir être aisément mémorisé par l'utilisateur. L'introduction de ce code confidentiel, qui est effectuée à l'aide des boutons du clavier simplifié mentionné ci-dessus, permet d'engendrer un code système comportant un nombre de chiffres plus élevé. Il est, en effet, nécessaire de limiter les risques que deux codes systèmes soient identiques, afin que la probabilité pour que deux bicyclettes circulant à proximité l'une de l'autre présentent des codes systèmes identiques.

Ainsi, avec un code confidentiel, la possibilité d'utilisation non autorisée de l'émetteur est encore diminuée et l'initialisation du système est simplifiée.

Pour réinitialiser, par exemple quand le récepteur a été changé ou réparé, il faut de nouveau introduire le code confidentiel.

La sécurité contre le vol est encore améliorée, si on prévoit la possibilité d'introduire le code confidentiel à chaque utilisation nouvelle de la bicyclette. Dans ce cas, on prévoit des moyens pour inhiber le fonctionnement du système quand la bicyclette n'a pas été utilisée pendant un temps déterminé, par exemple 5 minutes. Au lieu de cette inhibition automatique, on peut également prévoir l'introduction d'un code confidentiel d'inhibition.

## Revendications

1. Système de commande électrique d'un organe d'une bicyclette, ce système comprenant un émetteur (13) de signaux de commande, caractérisé en ce que l'émetteur (13) émet des signaux (45) codés spécifiques au système de façon que les ordres d'actionnement ne soient reconnaissables que par les organes (40) du même système.

2. Système selon la revendication 1, caractérisé en ce qu'il comporte des moyens pour introduire un code confidentiel permettant l'initialisation des signaux codés spécifiques au système.

3. Système selon la revendication 2, caractérisé en ce que le nombre de chiffres du code confidentiel est inférieur au nombre de chiffres des signaux codés spécifiques.

4. Système selon la revendication 2 ou 3, caractérisé en ce qu'il comporte des moyens pour introduire le code confidentiel au début de chaque utilisation de la bicyclette.

5. Système selon la revendication 4, caractérisé en ce qu'il comporte des moyens pour inhiber le fonctionnement du système à la fin de chaque utilisation de la bicyclette.

6. Système selon la revendication 5, caractérisé en ce que les moyens pour inhiber comprennent des moyens pour introduire un autre code confidentiel à la fin de chaque utilisation.

7. Système selon l'une quelconque des revendications précédentes, caractérisé en ce que la réception d'un code non autorisé par le récepteur (40) provoque un fonctionnement perturbé de l'organe d'actionnement.

8. Système selon la revendication 7, caractérisé en ce que l'organe d'actionnement étant un dérailleur, le fonctionnement perturbé est un changement fréquent de vitesses.

9. Système selon la revendication 8, caractérisé en ce que le fonctionnement perturbé est un cycle permanent de la plus petite à la plus grande vitesse et de la plus grande vitesse à la plus petite vitesse.
